# EUROPÄISCHE PATENTSCHRIFT

(11) **EP 2 507 149 B1**
(45) Veröffentlichungstag und Bekanntmachung des Hinweises auf die Patenterteilung: **12.02.2014**
(21) Anmeldenummer: 10788056.9
(22) Anmeldetag: 01.12.2010
(51) Int. Cl.: B65G 13/071, B65G 47/26

(54) **TRANSPORTBAHN FÜR STÜCKGÜTER**
CONVEYING SYSTEM FOR PIECE GOODS
TRANSPORTEUR POUR DES MARCHANDISES

(30) Priorität: 04.12.2009 DE 102009044783
(43) Veröffentlichungstag der Anmeldung: 10.10.2012
(73) Patentinhaber: Dynamic Systems Engineering b.v., 7005 AG Doetinchem (NL)
(72) Erfinder: JANSEN, Wilbert, 7091 VC Dinxperlo (NL)
(74) Vertreter: Christophersen & Partner
(86) Internationale Anmeldenummer: PCT/EP2010/068623
(87) Internationale Veröffentlichungsnummer: WO 2011/067279

(56) Entgegenhaltungen:
- EP-A1- 1 314 663
- DE-A1- 2 136 680
- US-A- 5 004 094
- US-A1- 2006 151 302
- US-B1- 6 220 420

## Beschreibung

Die Erfindung betrifft eine Transportbahn für Stückgüter mit längs der Transportbahn auf zueinander parallelen Drehachsen angeordneten Rollen oder Walzen, von denen zumindest eine Teilmenge über ein gemeinsames Antriebsmittel in Drehung versetzbar ist, wobei im Kraftfluss zwischen dem gemeinsamen Antriebsmittel und den Rollen bzw. Walzen jeweils ein Drehmomentbegrenzer angeordnet ist. Dabei ist eine Gruppe aufeinander folgender Rollen bzw. Walzen, welche Gruppe sich auf eine Teillänge des durch das gemeinsame Antriebsmittel angetriebenen Transportbahnabschnitts beschränkt, durch ein um die Rollen bzw. Walzen dieser Gruppe geschlungenes Transmissionselement drehgekoppelt.

Aus einer Vielzahl hintereinander angeordneter Transportwalzen zusammengesetzte Transportvorrichtungen sind z.B. aus der US 2007/0119690 A1 und der US 4,006,815 bekannt. Der Antrieb der Transportwalzen erfolgt in beiden Fällen über einen gemeinsamen Antriebsriemen. Bei der US 4,006,815 ist jede Walze zwecks Realisierung einer Art Rutschkupplung im Kraftfluss zwischen dem Antriebsriemen und den Transportwalzen mit einer Antriebsrolle versehen, welche mit der Walze nicht verbunden ist, aber im Reibschluss steht. Im Bereich dieses Reibschlusses stützt sich die Transportwalze mit ihrem einen Ende auf der Antriebsrolle ab, an der wiederum von unten der Antriebsriemen angreift. Übersteigt, etwa wegen eines Rückstaus der Stückgüter auf der Transportvorrichtung, das für den Weitertransport der Güter erforderliche Drehmoment das durch Reibung übertragbare Drehmoment, so dreht die Antriebsrolle gegenüber der Transportwalze durch. Da sich aber die Transportwalze einschließlich des aufliegenden Warengewichts auf der Antriebsrolle abstützt, kommt es vor allem beim Transport schwerer Stückgüter zu einer stark erhöhten Reibung zwischen Transportwalze und Antriebsrolle mit der Folge, dass von den nachfolgenden Stückgütern ein hoher Staudruck aufgebaut wird, wodurch z. B. an einer in Transportrichtung folgenden Sperre einer Rückhaltevorrichtung hohe Rückhaltekräfte entstehen.

Eine mit geringerem Staudruck arbeitende Transportvorrichtung ist aus der EP 1 189 825 B1 bekannt. Deren Rollen bzw. Walzen sind an beiden Enden in längs der Rollenbahn angeordneten Profilen gelagert, wobei diese Lagerungen die auf den Walzen lastenden Gewichtskräfte vollständig aufnehmen. Jede Walze ist an ihrem einen Ende mit einem runden Lagerabschnitt versehen, auf dem Buchse drehbar gelagert ist, an der von unten her der für mehrere derartiger Walzen gemeinsame Antriebsriemen anliegt. Zur Verstärkung der Andrückkraft des Antriebsriemens kann eine unterhalb angeordnete Gegendruckrolle dienen, sofern der Antriebsriemen unter Reibschluss zwischen der Gegendruckrolle und den oberhalb angeordneten Buchsen hindurchführt. Diese Rollenbahn arbeitet mit geringeren Antriebskräften auf die Stückgüter und daher auch mit einem geringeren Staudruck, da das übertragbare Drehmoment zwischen der Buchseninnenfläche und dem Lagerabschnitt gewichtsunabhängig gering ist und insbesondere geringer ist, als das übertragbare Drehmoment zwischen dem Antriebsriemen und der Buchsenaußenfläche.

Der Erfindung liegt die **Aufgabe** zugrunde, eine gattungsgemäße Transportbahn für Stückgüter zu schaffen, die mit nochmals geringerem Staudruck arbeitet.

Zur **Lösung** dieser Aufgabe wird bei einer Transportbahn für Stückgüter der eingangs genannten Art vorgeschlagen, dass sich vor der vordersten Walze und hinter der hintersten Walze der Gruppe unabhängige, nicht zur Gruppe gehörende Einzelrollen bzw. Einzelwalzen befinden, die ebenfalls durch das gemeinsame Antriebsmittel in Drehung versetzbar sind.

Eine solche Rollentransportbahn ermöglicht den Transport von Stückgütern mit sehr geringem Staudruck, weshalb sie sich für eine Vielzahl an Einsatzmöglichkeiten eignet. Erreicht wird die Staudruckreduzierung, indem eine Gruppe aufeinander folgender Rollen bzw. Walzen mittels eines Transmissionselements drehgekoppelt ist, etwa mittels eines um die Walzen der Gruppe geschlungenen, endlosen Bandes. Wird mindestens eine Walze der Gruppe durch ein auf dieser Walze aufliegendes, rückgestautes Stückgut abgebremst, führt dies zu einem Abbremsen bzw. Stillstand des Bandes mit der Folge eines Abbremsens bzw. Stillstandes auch aller übrigen Walzen der Gruppe, so dass diese kein Antriebsmoment mehr ausüben. Gelangt nun ein nachfolgendes Stückgut auf den durch die Gruppe definierten Längsabschnitt der Transportbahn, so wirkt entlang dieses Längsabschnitts keine oder nur eine stark reduzierte Förderkraft, wodurch das nachfolgende Stückgut zum Stillstand kommt, noch bevor es in Kontakt mit dem vorhergehenden Stückgut treten kann.

Die Rollenbahn kann entweder horizontal verlaufen, wobei der Transport der Stückgüter ausschließlich durch den Antrieb der Transportwalzen bewirkt wird, oder die Rollenbahn kann geringfügig ansteigend oder abschüssig geneigt sein. In letzterem Fall werden zwei Transportmechanismen gleichzeitig eingesetzt. Der erste Transportmechanismus ist der Antrieb der Walzen der Rollenbahn mittels eines oder zweier Antriebsriemen. Der zweite Antriebsmechanismus ist die Wirkung der Schwerkraft infolge der leicht abschüssig geneigten Rollenbahn. Ein solcher doppelter Fördermechanismus führt zu einer hervorragenden Gleichmäßigkeit in der Transportgeschwindigkeit der Stückgüter unabhängig von deren Gewicht, Form und Größe. Stückgüter mit hohem spezifischem Gewicht wie z. B. schwere Getränkekisten werden ebenso schnell und mit nahezu konstant bleibender Fördergeschwindigkeit entlang der Rollenbahn transportiert wie leichte Gebinde, z. B. Kartonverpackungen mit Kartoffelchips oder Gebinde mit Hygienepapier. Im Falle einer abschüssig geneigten Transportbahn hat sich für die Erzielung einer solchen Vergleichmäßigung ein Neigungswinkel der Rollenbahn von 2,5 - 6 %, vorzugsweise 3-3,5 % als besonders geeignet herausgestellt.

Um einen seitlichen Versatz oder ein Verschwenken der Stückgüter beim Transport auf der Rollenbahn zu vermeiden, wird mit einer Ausgestaltung vorgeschlagen, dass das Transmissionselement ein im Bereich der Transportbreite der Rollenbahn um deren Rollen bzw. Walzen herumgeführtes Endlosband ist, welches in Bezug auf die Transportbreite der Rollenbahn mittig angeordnet ist. Von Vorteil ist ferner, wenn das Endlosband unmittelbar um den zylindrischen Walzengrundkörper der Walzen herum geschlungen ist. Hierdurch kommt es zu einem unmittelbaren Kontakt und damit Reibschluss zwischen der Außenseite des Endlosbandes und dem sich darauf abstützenden Stückgut.

Mit einer weiteren Ausgestaltung wird vorgeschlagen, dass das Endlosband von flachem Querschnitt mit einem Dicken- zu Breitenverhältnis von nicht mehr als 1 : 20 ist. Ein derartig flaches Band führt zu keinem nennenswerten Höhenversatz und damit Widerstand beim Überfahren durch ein Stückgut, so dass der Transport der Stückgüter ruhig und im Wesentlichen erschütterungsfrei erfolgt.

Eine Ausgestaltung der Transportbahn ist gekennzeichnet durch eine am Ende der Transportbahn oder eines Transportbahnabschnitts in den Förderweg ragende, gesteuert freigebbare Sperre oder ein anderes Rückhalteelement. In diesem Fall ist die Transportbahn stromaufwärts der Sperre in Stückgutplätze gegliedert, wobei der erste Stückgutplatz der bis an die Sperre heranreichende Platz ist, und sich die erste Walze der über das Transmissionselement drehverbundenen Gruppe unter einem Stückgutplatz, und die letzte Walze der Gruppe unter dem nächsten Stückgutplatz befindet.

Bei der praktischen Realisierung der Transportbahn hat es sich für einen geringen Staudruck als günstig erwiesen, wenn die über das Transmissionselement drehverbundene Gruppe aus nicht weniger als drei, aber auch nicht aus mehr als sechs Walzen besteht.

Mit einer weiteren Ausgestaltung wird vorgeschlagen, dass mindestens zwei Walzen und eine Gegendruckrolle auf Lagerzapfen drehgelagert sind, welche einstückig mit einem gemeinsamen Rollenträger ausgebildet sind. Dies vereinfacht erheblich die schnelle Montage der Rollenbahn, da sich die gemeinsamen Rollenträger mit wenigen Handgriffen an den längs der Rollenbahn verlaufenden Profilen verankern lassen, so dass sich in einem einzigen Montageschritt gleichzeitig mehrere Walzen einschließlich der zugeordneten Gegendruckrollen montieren lassen.

Nachfolgend wird eine erfindungsgemäße Vorrichtung anhand eines Ausführungsbeispieles und unter Bezugnahme auf die Zeichnungen erläutert. Darin zeigen:

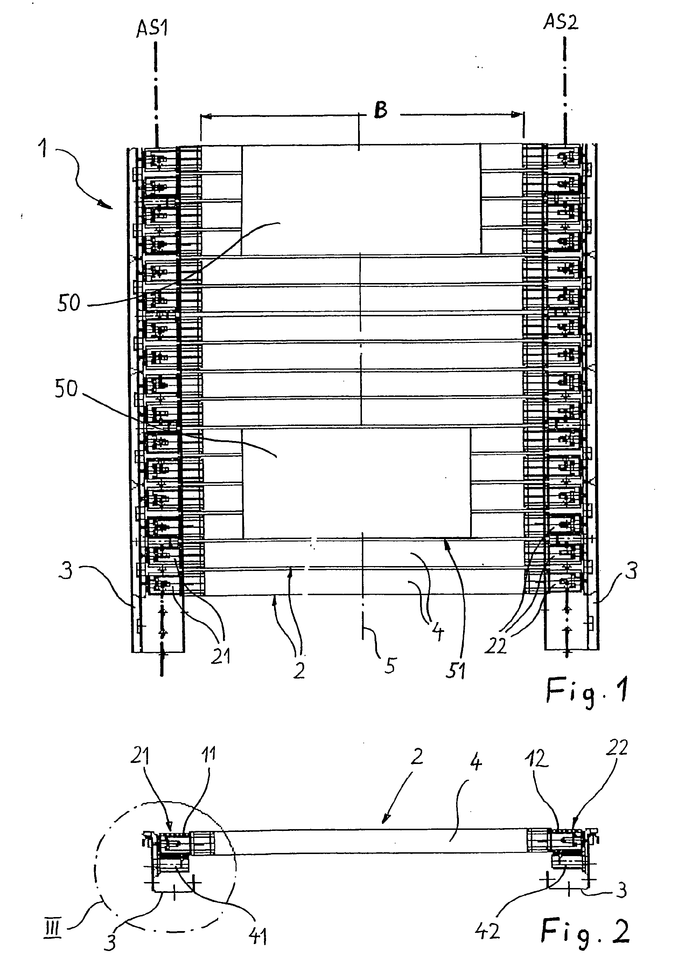

- Fig. 1: eine Draufsicht auf einen Längsabschnitt einer aus einer Vielzahl von Transportwalzen zusammengesetzten Rollenbahn mit zwei Antriebssträngen für die einzelnen Walzen;
- Fig. 2: einen Schnitt durch die Rollenbahn;
- Fig. 3: in vergrößerter Darstellung die in Fig. 2 mit III bezeichnete Einzelheit des linken Antriebsstrangs, nämlich einen ersten Antriebsriemen, der zwischen einer unterhalb angeordneten Gegendruckrolle und einer oberhalb angeordneten, auf der Transportwalze frei drehbar gelagerten Buchse hindurchgeführt ist;
- Fig. 4: in einer Seitenansicht des linken Antriebsstrangs der Rollenbahn die Gestaltung eines gemeinsamen Rollenträgers, an dem sowohl mehrere Transportwalzen als auch eine Gegendruckrolle frei drehbar gelagert sind;
- Fig. 5: eine Draufsicht auf das entnahmeseitige Ende der Transportbahn und
- Fig. 6: einen Längsschnitt gemäß der in Fig. 5 eingezeichneten Schnittlinie VI.

Die horizontal oder leicht abschüssig angeordnete Rollenbahn 1 für den Transport gleichartiger, d.h. jeweils gleich großer und gleich schwerer Stückgüter besteht aus einem linken und einem rechten Profil 3 sowie daran gelagerten Transportrollen oder -walzen 2. Als Antriebsmittel für die Rollen bzw. Walzen 2 dient entweder ein einzelner, vorzugsweise elektrisch angetriebener und einseitig an der Rollenbahn entlanggeführter Antriebsriemen oder, wie im folgenden näher beschrieben, zwei angetriebene Antriebsriemen, von denen der erste Antriebsriemen 31 auf der einen, und der zweite Antriebsriemen 32 auf der anderen Seite unterhalb der Rollenbahn entlanggeführt ist.

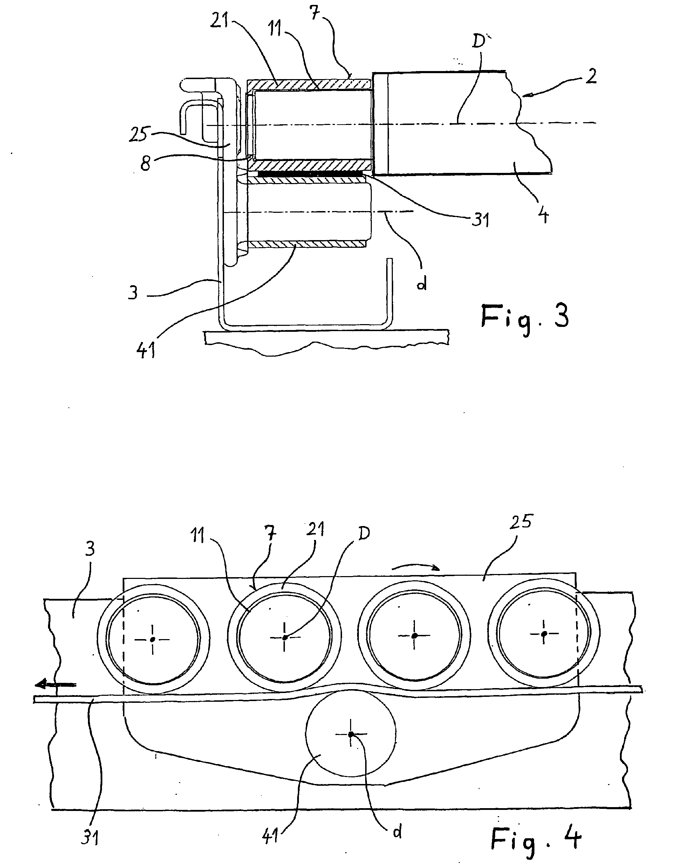

Alle Walzen 2 sind identisch aufgebaut und jeweils zu ihrer Längsmitte 5 symmetrisch, wodurch sie bei der Montage der Rollenbahn gleichermaßen um 180° verdreht in die Rollenbahn einbaubar sind. Die Rollen bzw. Walzen 2 bestehen aus einem langgestreckt gestalteten, zylindrischen Walzengrundkörper 4, auf dem die transportierten Stückgüter mit ihrer Unterseite aufliegen. An den Walzengrundkörper 4 schließt sich zu beiden Rändern der Rollenbahn 1 hin jeweils ein als Zapfen ausgebildeter, zylindrischer Lagerabschnitt 11, 12 an. Dessen Durchmesser kann geringer als der Durchmesser des Walzengrundkörpers 4 sein. Auf jedem Lagerabschnitt 11, 12 befindet sich, diesen umgebend, eine zylindrische Buchse 21, 22, vorzugsweise aus Kunststoff. Deren Gestaltung und Zusammenwirken mit weiteren Teilen der Transportvorrichtung wird nachfolgend anhand der Figuren 3 und 4 beschrieben.

Beide Buchsen 21, 22 der jeweiligen Walze 2 weisen jeweils eine zylindrische Innenfläche auf, deren Durchmesser nur geringfügig größer als der Durchmesser des betreffenden runden Lagerabschnitts 11, 12 der Walze ist. Auf diese Weise können die Buchsen 21, 22 mit geringem Spiel und geringer Reibung um die Drehachse D der Walze 2 drehen.

Falls, wie dargestellt, die Außenfläche 7 der Buchse 21, 22 einen Durchmesser aufweist, der geringer als der Durchmesser des Walzengrundkörpers 4 der Walze 2 ist, kann das auf dem Walzengrundkörper 4 aufliegende Stückgut nicht in Berührung mit den Buchsen 21, 22 kommen. Jede Buchse 21, 22 ist an ihrem nach außen weisenden Ende mit einem radial nach innen vorstehenden Bund 8 versehen, der in eine entsprechend gestaltete Nut des Lagerabschnitts 11, 12 eingreift. Hierdurch wird das Bewegungsspiel jeder Buchse 21, 22 in Walzenlängsrichtung begrenzt bzw. eingestellt.

Weitere Bestandteile des hier betrachteten Rollenbahnabschnitts, der eine Teillänge der gesamten Transportbahn einnimmt, sind, im Bereich des linken Profils 3 und damit auf dem linken Antriebsstrang, der erste Antriebsriemen 31 sowie mehrere erste Gegendruckrollen 41 sowie, im Bereich des rechten Profils 3 und damit auf dem rechten Antriebsstrang, der zweite Antriebsriemen 32 sowie mehrere zweite Gegendruckrollen 42. Die Gegendruckrollen 41, 42 sind auf Drehachsen d gelagert, deren Lage ortsfest ist. Diese Drehachsen d befinden sich in einer Ebene unterhalb der Ebene der Drehachsen D der Walzen, und sind parallel zu diesen.

Gemäß Fig. 4 liegt die Drehachse d der Gegendruckrolle nicht exakt unter der Drehachse D einer Walze 2 und deren Buchsen 21, 22, sondern ist, in Längsrichtung der Rollenbahn 2 betrachtet, um eine Länge versetzt. Dieser Versatz ist derart, dass, in Längsrichtung der Rollenbahn betrachtet, jede Gegendruckrolle 41, 42 mittig zwischen zwei aufeinander folgenden Walzen 2 angeordnet ist. Die Drehachsen D, d weisen einen solchen vertikalen Abstand zueinander auf, dass der zwischen den oberhalb angeordneten Buchsen 21, 22 und der jeweils unterhalb angeordneten Gegendruckrolle 41, 42 hindurchgeführte Antriebsriemen 31, 32 vor und hinter der Gegendruckrolle 41, 42 nicht exakt geradlinig verläuft, sondern mit einem vertikalen Versatz zu den Transportwalzen 2 hin. Der durch die Gegenrolle bewirkte Höhenversatz des Antriebsriemens 31, 32 bewirkt, dass dieser an den unmittelbar vor und hinter dem Versatz angeordneten Buchsen nicht nur leicht anliegt, sondern über eine gewisse Umschlingungslänge mit der Folge einer erhöhten Andrückkraft auf diese Buchsen. Die übrigen Buchsen, in Fig. 4 die beiden äußeren Buchsen 21, stehen zwar ebenfalls in Berührungskontakt mit dem flach gestalteten Antriebsriemen. Jedoch wird ihre Buchsenaußenseite 7 nicht durch eine erhöhte Andrückkraft des Antriebsriemens 31, 32 beaufschlagt, sondern der flache Antriebsriemen liegt mit seinem gestreckten Abschnitt nur linienförmig und damit leicht von unten gegen diese übrigen Buchsen an. Dies aber reicht, zumal bei gummiertem Antriebsriemen, für einen Antrieb auch dieser Buchsen aus.

Zur schnelleren Endmontage der Rollenbahn ist eine Gruppe aus hier vier Walzen 2 und einer Gegendruckrolle 41 auf Lagerzapfen bei D und d drehgelagert, die einstückig mit einem gemeinsamen Rollenträger 25 ausgebildet sind. Der Rollenträger 25 ist auf dem jeweiligen Profil 3 montierbar und mittels Schnappelementen verriegelbar.

Die Größe der Andrückkraft auf dem linken und dem rechten Antriebsstrang bestimmt zum einen die Größe der Reibung zwischen dem Antriebsriemen und der Außenfläche 7 der jeweiligen Buchse. Zugleich ist aufgrund der unterschiedlichen Materialien von Buchse und Antriebsriemen das übertragbare Drehmoment zwischen dem z.B. an seiner Oberseite gummierten und daher erhöht griffigen Antriebsriemen 31, 32 und der Buchsenaußenfläche 7 beträchtlich größer, als das übertragbare Drehmoment zwischen der Buchse 21, 22 und dem Lagerabschnitt 11, 12. Denn die Innenfläche der Buchse 21, 22 ist ebenso wie die Mantelfläche des Lagerabschnitts 11, 12 glatt, weshalb die Buchse 21, 22 zusammen mit dem jeweiligen Lagerabschnitt 11, 12 einen mechanisch arbeitenden Drehmomentbegrenzer darstellt. Bereits bei geringem Widerstand rutscht die Buchse auf dem Lagerabschnitt durch, so dass kein größeres Antriebsmoment auf die Walze übertragbar ist.

Auf die beiden in Fig. 4 unmittelbar vor und hinter der Gegendruckrolle 41 angeordneten Buchsen 21 wird eine größere Antriebskraft übertragen, als auf die beiden übrigen Buchsen 21. Da zugleich die Größe der Andrückkraft des Riemens auch die Größe der Reibung zwischen Buchse und Lagerabschnitt beeinflusst, wird im Ergebnis auf jene Walzen, welche unmittelbar vor und hinter einer Gegendruckrolle 41 angeordnet sind, eine höhere Walzenantriebskraft übertragen, als auf die übrigen Walzen.

Die Anordnung der Gegendruckrollen 41, 42 entlang der beiden Antriebsstränge AS1, AS2 ist daher ein Mittel, um abschnittsweise entlang der Rollenbahn die Walzenantriebskraft zu erhöhen oder, durch Weglassen von Gegendruckrollen 41, 42, zu reduzieren. Diese Wirkung wird in entscheidender Weise dadurch gesteigert, dass die Rollenbahn mit mindestens zwei voneinander unabhängigen Antriebssträngen arbeiten kann, von denen der erste Antriebsstrang AS1 durch den ersten Antriebsriemen 31 in Verbindung mit den ersten Buchsen 21 und den ersten Gegendruckrollen 41, und der weitere Antriebsstrang AS2 durch den zweiten Antriebsriemen 32 in Verbindung mit den zweiten Buchsen 22 und den zweiten Gegendruckrollen 42 gebildet wird.

Von Vorteil kann es sein, wenn bei zumindest einer Teilmenge der Rollen bzw. Walzen 2 die Einleitung der Antriebskraft in die Walze nicht symmetrisch, also links und rechts in gleicher Größe, erfolgt, sondern asymmetrisch. Dies lässt sich erreichen, indem unmittelbar vor oder hinter der einen Buchse 21 der Rolle bzw. Walze 2 eine Gegendruckrolle angeordnet ist, nicht hingegen unmittelbar vor oder hinter der anderen Buchse 22 dieser Rolle bzw. Walze. An den beiden Krafteinleitungsorten der jeweiligen Rolle bzw. Walze werden also unterschiedliche Förderkräfte übertragen. Ferner lassen sich andere Walzen 2 der Rollenbahn mit einem besonders niedrigen Antriebsmoment antreiben, indem keine der beiden Buchsen 21, 22 dieser Walzen unmittelbar vor oder hinter einer Gegendruckrolle 41, 42 angeordnet ist. Umgekehrt lassen sich einzelne Rollen bzw. Walzen mit einem besonders hohen Antriebsmoment antreiben, indem beide Buchsen 21, 22 dieser Walzen unmittelbar vor oder unmittelbar hinter einer Gegendruckrolle 41, 42 angeordnet sind.

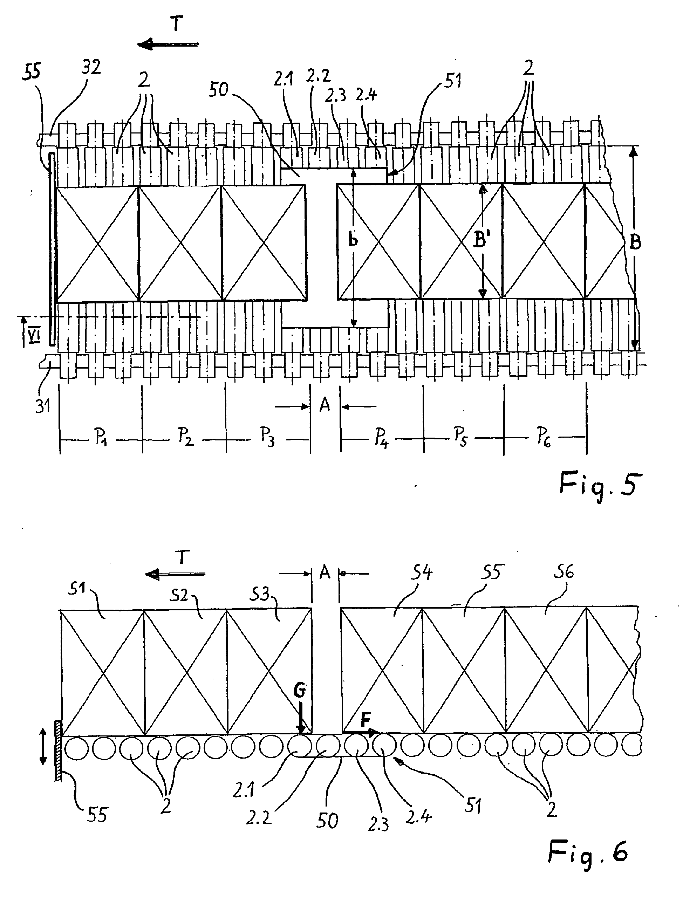

Die Fign. 5 und 6 zeigen das Ende der Transportbahn. Dort entsteht das Problem des Staudrucks, sobald eine Reihe der in Transportrichtung T bewegten Stückgüter S an einer bis über die Förderebene der Transportbahn ragenden Sperre 55 zurückgehalten wird. Die Sperre 55 ist Bestandteil eines durch Signale einer Programmeinheit angesteuerten Rückhaltemechanismus, und sie ist zur Freigabe des jeweils ersten Stückguts S1 kurzzeitig absenkbar. Auf diese Weise kommt die Rollentransportbahn in einem aus einer Vielzahl gleicher Rollenbahnen bestehenden Kommissionierlager zum Einsatz. Ein solches Kommissionierlager für quaderförmige Stückgüter wie z.B. Waren in Kartonverpackungen ist in der EP 1 189 825 B1 beschrieben.

Sobald sich eine größere Zahl von Stückgütern S bei aktiver Sperre 55 rückstaut, baut sich an den vorhergehenden Stückgütern S ein Druck auf, der umso größer ist, je größer die Anzahl der nachfolgenden Stückgüter S ist. Da alle angetriebenen Walzen 2 mit Drehmomentbegrenzern versehen sind, ist zwar der durch jedes einzelne Stückgut in Transportrichtung T ausgeübte Druck nicht groß, jedoch kommt es bei entsprechend langer Rollenbahn zu einer Summierung der Förderdrücke mit der Folge einer letztlich erheblichen Belastung vor allem der ersten Stückgüter der Reihe. Nachteilig ist auch der sich hierbei an der absenkbaren Sperre 55 aufbauende Druck, der so groß werden kann, dass sich die Sperre 55 nicht mehr zuverlässig öffnen lässt.

Für eine effiziente Reduzierung des Staudrucks sind einige aufeinander folgende Walzen 2.1 - 2.4 der Rollenbahn zu einer Walzengruppe 51 zusammengefasst. Sie sind hierzu mittels eines die Gruppenmitglieder 2.1 - 2.4 umschlingenden Bandes 50 miteinander drehverbunden. Das Band 50 arbeitet als Transmissionselement, indem es als Endlosband um die gleich großen und in derselben Ebene angeordneten Walzen 2.1 - 2.4 der Walzengruppe herumgeführt ist, wobei das Band 50 jeweils an der vordersten Walze 2.1 und der hintersten Walze 2.4 der Walzengruppe um 180° umgelenkt wird.

Die so zusammengefasste Walzengruppe 51 beschränkt sich auf eine Teillänge des durch den gemeinsamen Antriebsriemen 31, 32 angetriebenen Rollenbahnabschnitts, d.h. sowohl vor der vordersten Walze 2.1, als auch hinter der hintersten Walze 2.4 der Gruppe befinden sich wieder mehrere "normale" Einzelrollen bzw. -walzen 2, die also nicht Mitglieder einer Gruppe sind, jedoch ebenfalls über den gemeinsamen Antriebsriemen 31, 32 in Drehung versetzbar sind. Einzelne dieser Einzelrollen bzw. -walzen 2 können auch antriebslos und frei drehbar sein.

Mit einer Breite b kann das Band bzw. Transmissionselement 50 weniger breit sein, als die für den Stückguttransport insgesamt zur Verfügung stehende Transportbreite B der Rollenbahn. Vorzugsweise aber ist das Transmissionselement 50 von solcher Anordnung und Breite b, dass es sich jedenfalls innerhalb der Aufstandsbreite B' der Stückgüter befindet.

Das Transmissionselement 50 ist um den Walzengrundkörper 4 der Walzen herumgeführt, also um jene zylindrische Mantelfläche der Walzen, auf denen die Stückgüter entlang rollen. Damit es zu keinem nennenswerten Höhenversatz und damit Widerstand beim Überfahren des Bandes 50 durch die Stückgüter kommt, ist das Band 50 von flachem Querschnitt, vorzugsweise mit einem Dicken- zu Breitenverhältnis von nicht mehr als 1 : 20.

In den Fign. 5 und 6 ist, da diese nur das entnahmeseitige Ende der Transportbahn wiedergeben, nur eine einzige Gruppe 51 drehgekoppelter Walzen 2.1 bis 2.4 dargestellt. Es können aber entlang der Transportbahn weitere derartige Walzengruppen angeordnet sein.

So kann z. B. nach jeweils zehn bis fünfzehn unabhängigen Walzen 2 eine Walzengruppe 51 angeordnet sein. In jedem Fall aber sind die ersten hinter, d.h. stromaufwärts, der Sperre 55 gelagerten Rollen bzw. Walzen 2 unabhängig, d.h. sie sind nicht über ein Band 50 miteinander drehverbunden.

Die genaue Anzahl und Lage der zu Gruppen 51 zusammengefassten Walzen 2.1 - 2.4 im Verhältnis zu den unabhängigen Walzen 2 richtet sich nach den individuellen Anforderungen der Rollenbahn, wobei neben der Geometrie und einer etwaigen abschüssigen Neigung der Rollenbahn insbesondere die Aufstandsgröße und das Gewicht der Stückgüter S eine Rolle spielt

Anhand der Fign. 5 und 6 lässt sich die Wirkung der über das Band 50 drehverbundenen Walzengruppe 51 erläutern: Die stromaufwärts der Sperre 55 ersten Stückgüter, hier drei Stückgüter S1, S2, S3, nehmen auf der Rollenbahn die Stückgutplätze P1, P2 und P3 ein. Die Länge dieser Stückgutplätze P ist gleich der jeweiligen Länge der sich dort befindenden Stückgüter S. Die erste Walzengruppe 51 ist in Längsrichtung der Rollenbahn so positioniert, dass das letzte dieser drei Stückgüter zumindest auf der ersten Walze 2.1 dieser Walzengruppe aufliegt mit der Folge, dass durch dieses Stückgut S3 eine Gewichtskraft G auf die Walze 2.1 ausgeübt wird. Die Gewichtskraft G führt zu einem reibungsbedingten Klemmen des zwischen Stückgut S und erster Walze 2.1 angeordneten Bandabschnitts mit der Folge, dass das normalerweise über die Walzen 2.1 - 2.4 angetriebene Band 50 zum Stillstand kommt. Dieser Stillstand führt über die Reibung zwischen der Innenfläche des Bandes 50 und den übrigen Walzen 2.2 - 2.4 dazu, dass auch diese zum Stillstand kommen, zumindest aber abgebremst werden. Denn die wegen der Drehmomentbegrenzung mit geringem Antriebsmoment arbeitenden Antriebe der Walzen 2.1 - 2.4 sind zu schwach, um die in dem Band 50 wirkende Bremskraft F zu übersteuern. Dies verhindern, wie oben beschrieben, die ab einem bestimmten Antriebsmoment durchdrehenden Buchsen 21, 22.

Das dann nachfolgende Stückgut S, hier das vierte Stückgut S4, gelangt aufgrund der Förderkraft der unabhängigen Walzen 2 zwar teilweise auf das Band 50, wird dann jedoch, da das Band stillsteht, abgebremst. Praktisch wird sich dieses nachfolgende Stückgut soweit auf das Band 50 schieben, dass es zu einer Abstützung dieses Stückguts zumindest auf der letzten Walze 2.4 der Walzengruppe kommt. Jedoch können die von hinten nachrückenden Stückgüter dazu führen, dass das auf das Band 50 geschobene Stückgut, hier das vierte Stückgut, noch etwas weiter auf das Band geschoben wird, wobei jedoch selbst dann ein ausreichender Abstand A zu dem vorangehenden Stückgut S, hier dem dritten Stückgut S3, verbleibt, und durch diesen Abstand A die Staudruckkette unterbrochen ist.

Wird durch gesteuertes Absenken der Sperre 55 das erste Stückgut S1 freigegeben und so der Rollenbahn entnommen, rücken das zweite und dritte Stückgut aus ihren Positionen P2 und P3 in die neuen Positionen P1 und P2 vor. Mit Freiwerden des Stückgutplatzes P3 wird im Bereich der ersten Walze 2.1 die Gewichtskraft G aufgehoben und alle Walzen 2.1 - 2.4 der Walzengruppe 51 laufen wieder an. Hierdurch kann das nachfolgende Stückgut durch Überfahren der Walzengruppe von der Position P4 auf die Position P3 vorrücken. Sobald Position P3 erreicht ist, kommt das Stückgut zum Stillstand, wodurch aufgrund der Gewichtskraft G die Walzengruppe 51 erneut blockiert, unter Sicherstellung des Abstandes A zu der nachfolgenden Stückgutreihe.

Bei dem hier beschriebenen Ausführungsbeispiel ist das Transmissionselement 50 ein Band von relativ großer Breite b. Derselbe Effekt lässt sich auch mit schmaleren Bändern oder mit einem oder mehreren über die Rollen oder Walzen geführten Riemen erreichen.

Es ist zwar bevorzugt aber nicht zwingend, dass die Bänder bzw. Riemen von den Stückgütern überfahren werden, es also zu einem Kontakt des Riemens 50 mit der Unterseite der Stückgüter im Bereich von deren Aufstandsbreite B' kommt. Es kann ausreichen, dass das die Bremsfunktion auslösende Stückgut auf der ersten Rolle oder Walze 2.1 der Gruppe aufliegt und diese Rolle bzw. Walze zum Stillstand bringt. Denn bereits dadurch kommt es aufgrund der Transmission des Bandes bzw. Riemens zu einem Abbremsen auch aller übrigen Rollen bzw. Walzen der Gruppe. Schließlich ist es nicht zwingend dass, wie beim Ausführungsbeispiel, jede Rolle bzw. Walze 2, 2.1 - 2.4 der Rollenbahn durch einen oder beide Antriebsriemen 31, 32 angetrieben ist. Vielmehr können einzelne Rollen bzw. Walzen der Rollenbahn auch antriebslos, d.h. frei drehbar, gelagert sein.

### Bezugszeichenliste

- 1: Rollenbahn
- 2: Rolle bzw. Walze
- 2.1: erste Rolle bzw. Walze
- 2.2: Rolle, Walze
- 2.3: Rolle, Walze
- 2.4: letzte Rolle bzw. Walze
- 3: Profil
- 4: Walzengrundkörper
- 5: Längsmitte
- 7: Außenfläche der Buchse
- 8: Bund
- 11: runder Lagerabschnitt
- 12: runder Lagerabschnitt
- 21: Buchse
- 22: Buchse
- 25: Rollenträger
- 31: Antriebsriemen
- 32: Antriebsriemen
- 41: Gegendruckrolle
- 42: Gegendruckrolle
- 50: Transmissionselement, Band
- 51: Gruppe
- 55: Sperre
- A: Abstand
- AS1: Antriebsstrang
- AS2: Antriebsstrang
- b: Breite
- B: Transportbreite
- B': Aufstandsbreite
- D: Drehachse
- d: Drehachse
- F: Kraft
- G: Gewichtskraft
- P₁ - Pₙ: Stückgutplätze
- S: Stückgut
- T: Transportrichtung

## Patentansprüche

1. Transportbahn für Stückgüter mit längs der Transportbahn auf zueinander parallelen Drehachsen (D) angeordneten Rollen oder Walzen (2, 2.1 - 2.4), von denen zumindest eine Teilmenge über ein gemeinsames Antriebsmittel (31, 32) in Drehung versetzbar ist, wobei im Kraftfluss zwischen dem gemeinsamen Antriebsmittel (31, 32) und den Rollen bzw. Walzen jeweils ein Drehmomentbegrenzer angeordnet ist, und wobei eine Gruppe (51) aufeinander folgender Rollen bzw. Walzen (2.1 - 2.4), welche Gruppe (51) sich auf eine Teillänge des durch das gemeinsame Antriebsmittel (31, 32) angetriebenen Transportbahnabschnitts beschränkt, durch ein um die Rollen bzw. Walzen dieser Gruppe (51) geschlungenes Transmissionselement (50) drehgekoppelt ist, **dadurch gekennzeichnet, dass** sich vor der vordersten Walze (2.1) und hinter der hintersten Walze (2.4) der Gruppe (51) unabhängige, nicht zur Gruppe (51) gehörende Einzelrollen bzw. Einzelwalzen (2) befinden, die ebenfalls durch das gemeinsame Antriebsmittel (31, 32) in Drehung versetzbar sind.

2. Transportbahn nach Anspruch 1, **dadurch gekennzeichnet, dass** das Transmissionselement (50) ein im Bereich der Transportbreite (B) um die Rollen bzw. Walzen (2.1 - 2.4) herumgeführtes Endlosband ist.

3. Transportbahn nach Anspruch 1 oder 2, **dadurch gekennzeichnet, dass** das Transmissionselement (50) ein zumindest innerhalb der Aufstandsbreite (B') der Stückgüter um die Rollen bzw. Walzen (2.1 - 2.4) herumgeführtes Endlosband ist.

4. Transportbahn nach Anspruch 1 oder 2, **dadurch gekennzeichnet, dass** das Transmissionselement (50) mittig in Bezug auf die Transportbreite (B) angeordnet ist.

5. Transportbahn nach Anspruch 2 oder 3, **dadurch gekennzeichnet, dass** das Endlosband (50) um den zylindrischen Walzengrundkörper (4) der Rollen bzw. Walzen (2.1 - 2.4) herumgeführt ist.

6. Transportbahn nach Anspruch 2 oder 3, **dadurch gekennzeichnet, dass** das Endlosband (50) von flachem Querschnitt mit einem Dicken- zu Breitenverhältnis von nicht mehr als 1:20 ist.

7. Transportbahn nach einem der vorangehenden Ansprüche, **gekennzeichnet durch** eine am Ende der Transportbahn in den Förderweg ragende, gesteuert freigebbare Sperre (55).

8. Transportbahn nach Anspruch 7, **dadurch gekennzeichnet, dass** diese in Bahnlängsrichtung in Stückgutplätze (P₁, P₂, P₃, ...) gegliedert ist, von denen der erste Stückgutplatz (P₁) bis an die Sperre (55) reicht, und dass sich die erste Rolle bzw. Walze (2.1) der Gruppe (51) unter einem Stückgutplatz (Pₙ) und die letzte Rolle bzw. Walze (2.4) der Gruppe (51) unter dem nächsten Stückgutplatz (Pₙ₊₁) befindet.

9. Transportbahn nach einem der vorangehenden Ansprüche, **dadurch gekennzeichnet, dass** das Transmissionselement (50) eine Gruppe (51) von drei bis sechs Rollen bzw. Walzen (2.1 - 2.4) umschließt.

10. Transportbahn nach einem der vorangehenden Ansprüche, **dadurch gekennzeichnet, dass** mindestens zwei Rollen bzw. Walzen (2, 2.1 - 2.4) und eine Gegendruckrolle (41, 42) auf Lagerzapfen drehgelagert sind, die einstückig mit einem gemeinsamen Rollenträger (25) ausgebildet sind.

## Claims

1. Transporting path for articles, having rollers (2, 2.1-2.4) which are arranged along the transporting path, on parallel axes of rotation (D), and of which at least some can be made to rotate via a common drive means (31, 32), wherein a respective torque limiter is arranged within the flow of forces between the common drive means (31, 32) and the rollers, and wherein a group (51) of successive rollers (2.1-2.4), which group (51) is restricted to a sub-length of the transporting-path portion driven by the common drive means (31, 32), is coupled for rotation by a transmission element (50) wound around the rollers of said group (51), **characterized in that** independent, single rollers (2), which do not form part of the group (51) and can likewise be made to rotate by the common drive means (31, 32), are located upstream of the foremost roller (2.1) and downstream of the rearmost roller (2.4) of the group (51).

2. Transporting path according to Claim 1, **characterized in that** the transmission element (50) is an endless belt guided around the rollers (2.1-2.4) in the region of the transporting width (B).

3. Transporting path according to Claim 1 or 2, **characterized in that** the transmission element (50) is an endless belt guided around the rollers (2.1-2.4) at least within the stand-on width (B') of the articles.

4. Transporting path according to Claim 1 or 2, **characterized in that** the transmission element (50) is arranged centrally in relation to the transporting width (B).

5. Transporting path according to Claim 2 or 3, **characterized in that** the endless belt (50) is guided around the basic cylindrical body (4) of the rollers (2.1-2.4).

6. Transporting path according to Claim 2 or 3, **characterized in that** the endless belt (50) is of flat cross section with a thickness to width ratio of no more than 1:20.

7. Transporting path according to one of the preceding claims, **characterized by** a controlled-release barrier (55) projecting into the conveying route at the end of the transporting path.

8. Transporting path according to Claim 7, **characterized in that** it is divided longitudinally into article zones (P₁, P₂, P₃, etc.), of which the first article zone (P₁) extends as far as the barrier (55), and **in that** the first roller (2.1) of the group (51) is located beneath one article zone (Pₙ) and the last roller (2.4) of the group (51) is located beneath the next article zone (Pₙ₊₁).

9. Transporting path according to one of the preceding claims, **characterized in that** the transmission element (50) encloses a group (51) of three to six rollers (2.1-2.4).

10. Transporting path according to one of the preceding claims, **characterized in that** at least two rollers (2, 2.1-2.4) and a counterpressure roller (41, 42) are mounted for rotation on bearing stubs, which are formed in one piece with a common roller carrier (25).

## Revendications

1. Bande transporteuse pour des marchandises, comprenant des rouleaux ou des cylindres (2, 2.1 - 2.4) disposés le long de la bande transporteuse sur des axes de rotation parallèles les uns aux autres (D), dont au moins une quantité partielle peut être mise en rotation par le biais d'un moyen d'entraînement commun (31, 32), un limiteur de couple étant à chaque fois disposé dans le flux de forces entre le moyen d'entraînement commun (31, 32) et les rouleaux ou les cylindres, et un groupe (51) de rouleaux ou de cylindres successifs (2.1 - 2.4), lequel groupe (51) se limite à une longueur partielle de la section de la bande transporteuse entraînée par le moyen d'entraînement commun (31, 32), étant accouplé en rotation par un élément de transmission (50) entourant les rouleaux ou les cylindres de ce groupe (51), **caractérisée en ce que** des rouleaux individuels ou des cylindres individuels (2) indépendants, n'appartenant pas au groupe (51), sont disposés avant le cylindre le plus en avant (2.1) et derrière le cylindre le plus en arrière (2.4) du groupe (51), lesquels peuvent également être mis en rotation par le moyen d'entraînement commun (31, 32).

2. Bande transporteuse selon la revendication 1, **caractérisée en ce que** l'élément de transmission (50) est une bande sans fin guidée dans la région de la largeur de transport (B) autour des rouleaux ou des cylindres (2.1 - 2.4).

3. Bande transporteuse selon la revendication 1 ou 2, **caractérisée en ce que** l'élément de transmission (50) est une bande sans fin guidée autour des rouleaux ou des cylindres (2.1 - 2.4) au moins à l'intérieur de la largeur de support (B') des marchandises.

4. Bande transporteuse selon la revendication 1 ou 2, **caractérisée en ce que** l'élément de transmission (50) est disposé centralement par rapport à la largeur de transport (B).

5. Bande transporteuse selon la revendication 2 ou 3, **caractérisée en ce que** la bande sans fin (50) est guidée autour des corps de base cylindriques (4) des rouleaux ou des cylindres (2.1 - 2.4).

6. Bande transporteuse selon la revendication 2 ou 3, **caractérisée en ce que** la bande sans fin (50) a une section transversale plane avec un rapport épaisseur à largeur ne dépassant pas 1:20.

7. Bande transporteuse selon l'une quelconque des revendications précédentes, **caractérisée par** une barrière (55) pouvant être libérée de manière contrôlée, entrant dans la trajectoire de déplacement à l'extrémité de la bande transporteuse.

8. Bande transporteuse selon la revendication 7, **caractérisée en ce que** celle-ci est divisée dans la direction longitudinale de la bande en emplacements pour marchandise (P₁, P₂, P₃,...), dont le premier emplacement pour marchandise (P₁) s'étend jusqu'à la barrière (55), et **en ce que** le premier rouleau ou cylindre (2.1) du groupe (51) se trouve sous un emplacement pour marchandise (Pₙ) et le dernier rouleau ou cylindre (2.4) du groupe (51) se trouve sous l'emplacement pour marchandise suivant (Pₙ₊₁).

9. Bande transporteuse selon l'une quelconque des revendications précédentes, **caractérisée en ce que** l'élément de transmission (50) entoure un groupe (51) de trois à six rouleaux ou cylindres (2.1 - 2.4).

10. Bande transporteuse selon l'une quelconque des revendications précédentes, **caractérisée en ce qu'**au moins deux rouleaux ou cylindres (2, 2.1-2.4) et un rouleau de pression conjugué (41, 42) sont supportés à rotation sur des tourillons, lesquels sont réalisés d'une seule pièce avec un support de rouleaux commun (25).
